# EUROPEAN PATENT SPECIFICATION

(11) **EP 0 653 593 B1**
(45) Date of publication and mention of the grant of the patent: **29.04.1998**
(21) Application number: 94116304.0
(22) Date of filing: 17.10.1994
(51) Int. Cl.: F24C 15/32, A47J 39/00

(54) **Improvement in the steam control arrangement of a cooking oven**
Dampfsteuereinrichtung eines Backofens
Arrangement pour contrôler la vapeur dans un four de cuisson

(30) Priority: 15.11.1993 IT PN930031 U
(43) Date of publication of application: 17.05.1995
(73) Proprietor: ELECTROLUX ZANUSSI GRANDI IMPIANTI S.p.A., 33170 Pordenone (IT)
(72) Inventor: Cappello, Massimo, I-30026 Portogruaro, Venezia (IT); Levi, Bruno, I-33082 Azzano Decimo, Pordenone (IT)
(74) Representative: Giugni, Valter

(56) References cited:
- EP-A- 0 171 522
- AT-B- 368 382
- DE-A- 2 842 771

## Description

The present invention refers to a food cooking oven with fan-assisted operation, which is adapted to also cook foods by "steaming", ie. to perform the type of cooking which makes use of the appropriate inlet of water or steam into the cooking cavity so as to create special food cooking conditions and effects inside said cooking cavity.

In the following description reference is made in particular to a food cooking oven of the type intended for use in catering operations, professional kitchens and similar applications. It will however be appreciated that what is described and claimed in connection thereto in this patent actually applies to any kind whatsoever of food cooking ovens, as far as they are provided with a forced-convection feature and said "steaming" capability for cooking foods.

It is generally known that, when foodstuffs are cooked in an oven, the related process can be carried out according to different methods and under widely differing conditions, depending on the actual results and effects that one wishes to reach. In this connection, one of the most widely appreciated cooking methods is certainly the so-called steaming process consisting of letting water or steam into the cooking cavity.

This particular cooking method is widely known, so that it shall not be dealt with any farther herein, except for a mere mention of the European patent specifications nos. 0 386 862 (Lechmetall) and 0 183 009, as well as to the US patent specification no. 4,856,422, which may be considered as representing a valid reference to the actual state of the art.

Systems used to let steam into the cooking cavity of cooking ovens with fan-assisted operation are further widely known to make generally use of both a boiler arrangement located outside the cooking cavity for the generation of steam and a conduit provided to convey said steam from said boiler into said cavity. In such forced-convection/steaming ovens the need is particularly felt for appropriate provisions allowing for the flow of the steam being let into the cooking cavity to be regulated in accordance with the actual cooking requirements. As a matter of fact, if such provisions are not available, the corresponding usage of energy (power or gas) of such ovens for generating steam, along with the consumption of cooling water used to possibly bring about (with an appropriate arrangement) a condensation feature for the steam that is generated in excess of the actual needs, would turn out as being particularly high.

To regulate tie flow rate of the steam entering the cooking cavity, the provision is generally known of arranging a small-bore tube between the inside of the cooking cavity, in an area close to and in front of the axis of rotation of the fan wheel, where a negative pressure with respect to the ambient pressure is created owing to the air suction action of the fan wheel, and the outside of the same cavity. The air and the steam being in this way taken in are pushed by the fan, which is generally of the tangential type, towards the side walls of the cavity and, from there, into appropriate channels flanking said side walls along their whole length and height extension. From said channels, they are then introduced again in the cooking cavity through appropriate slits.

When a cooking process is being carried out for which steam must be let into the cooking cavity (ie. steaming or mixed steam + hot air operation), the steam itself starts by condensing onto the food being cooked, so that it transfers heat to the food and causes it to cook. In the meanwhile, air at a relatively low temperature (approx. 60°C) flows in from said conduit which is communicating with the outside.

As the cooking process progresses, there is a gradual decrease in the demand of steam which, when the food is eventually cooked, no longer condenses on the food and therefore, being it in excess, creates a slight overpressure inside the cooking cavity and starts to flow out from the tube and, in doing so, it touches a probe provided in said tube, said probe being connected to an appropriately rated and adjusted thermostat nearby which then cuts off the flow of steam towards the cooking cavity.

The steam generator is in this way cycled on and off to perform an intermittent type of operation, with a resulting energy saving effect.

However, owing to the fact that the cooking cavity is provided with a fan which is arranged on the rear side and housed in a back-chamber that is separated from said cooking cavity by a vertical partition wall, for a correct installation of said steam sensing tube, so as to have its inlet/outlet nozzle appropriately located in front of the suction intake of the fan, two holes must be drilled, ie. a first hole must be drilled in the rear wall of said back-chamber and a second hole must be drilled in said vertical partition wall , whereas said tube is made to run through said holes.

However, the required drilling and assembly operations, as well as the additional operations that must be performed in order to seal the rims of the holes around the tube, although they may be considered as being quite simple from a technological point of view, must be carried out when the structure of the oven is practically already assembled, are not capable of being automated and therefore bring about an interruption in the working cycle, take up considerable time and therefore are rather expensive in terms of manufacturing economy.

The main drawback of such an arrangement of said tube, however, comes in particular to light in the field, ie. at the users' facilities. As a matter of fact, it is a usually complied with requirement that the cooking cavity undergoes regularly a thorough cleaning operation. To this purpose, the need arises to also gain access into the back-chamber and this of course calls for the removal of said partition wall and, along with the latter, also of said tube. Now, this ultimately implies that several assembly and disassembly operations must be carried out each time. And these operations, although not very complex, keep anyway a person busy, typically the cook, who is not specifically supposed to perform such technical tasks of equipment maintenance. Furthermore, the subsequent re-assembly of the various parts may be quite easily be carried out in a wrong way due precisely to said tube in the first place and, anyway, the whole cleaning operation requires a significant length of time to be completed.

The need therefore arises to provide a cooking oven, in particular for foodservice applications in catering establishments, the construction of which does not involve any of the above described assembly and disassembly operations concerning the steam conduit, without this on the other hand implying any significant design and construction changes.

It is therefore a major purpose of the present invention to improve the construction of said cooking ovens through the implementation of the features that are described hereinafter with particular reference to the appended claims.

The present invention will be more clearly and effectively understood on the basis of the following description which is given merely by way of non-limiting example with reference to the accompanying drawings, in which:
- Figure 1 is a schematical view of a vertical cut-away of the longitudinal section of a cooking oven according to the present invention;

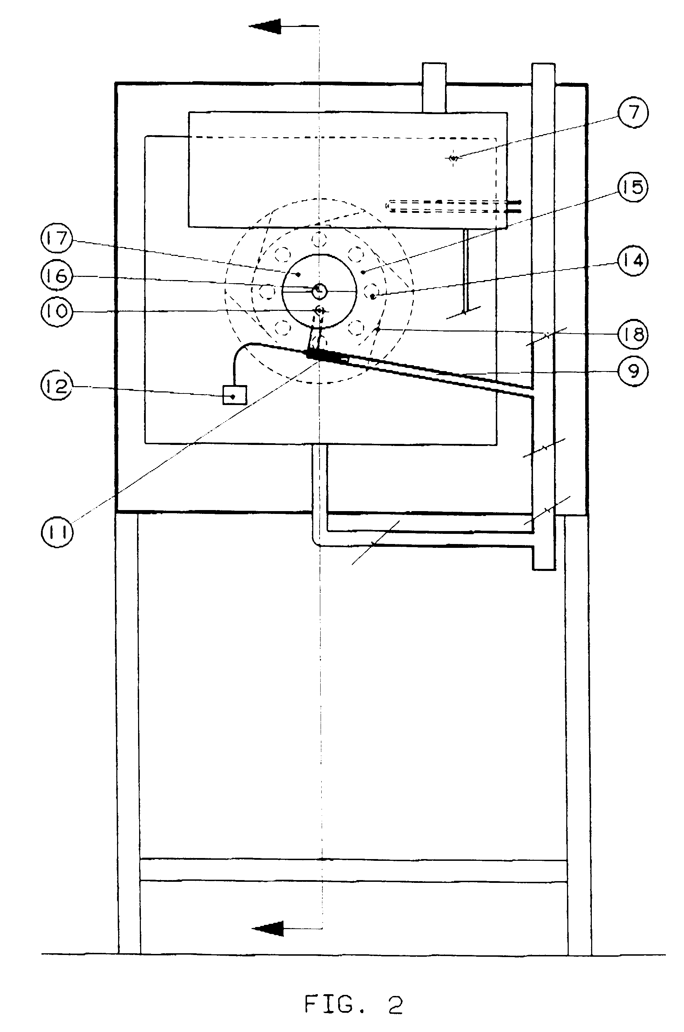

- Figure 2 is a schematical view of a vertical cut-away of the transversal section of the cooking oven shown in Figure 1.

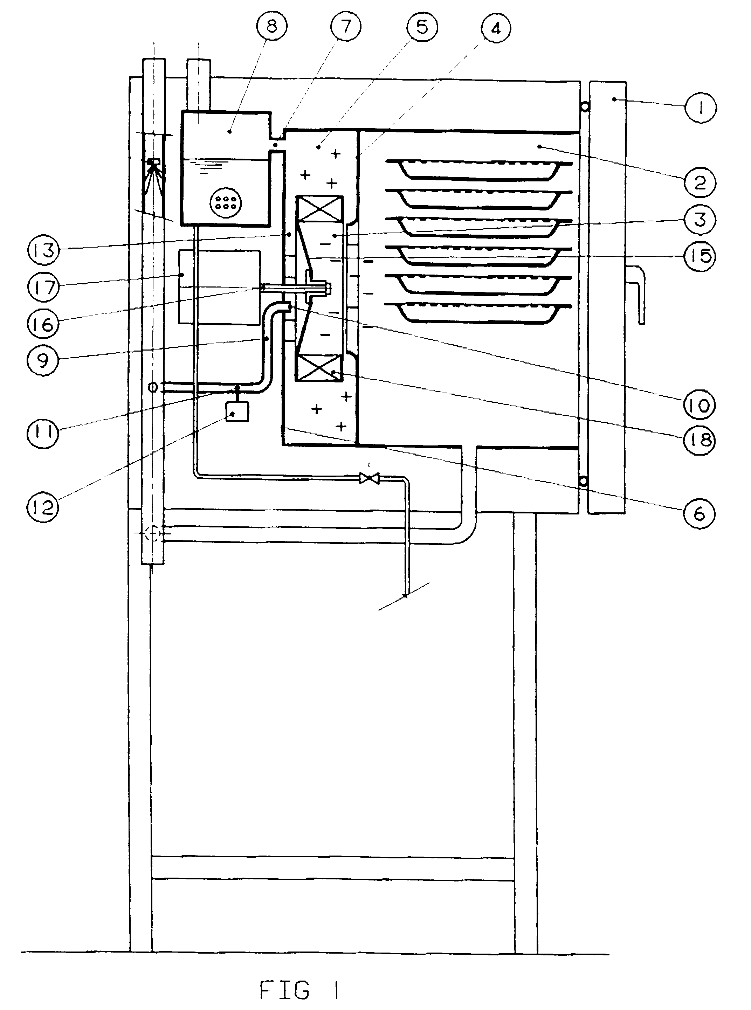

Referring now to Figure 1, this is shown to illustrate the inside of a food cooking oven intended for foodservice operations or catering establishments, comprising a door 1 provided to gain access into the inside of the cooking cavity 2, a motor-driven fan 3 located on the back side of said cooking cavity, a partion wall 4 to distribute and diffuse the air flow generated by said fan, a back-chamber 5 accomodating said fan and delimited on its front side by said partition wall 4 and in its rear side by the rear wall 6 of the oven.

An appropriate conduit 7, which is supplied with the steam flowing from an external boiler 8, is used to introduce steam into the cooking cavity.

During an experimental investigation carried out with a view to identify a more effective arrangement for the tube 9 provided to take in steam or air, it has been found that when the nozzle 10 of said tube is positioned behind the fan and oriented towards the latter, a sequence of positive and negative pressure values are achieved which coincide exactly with the ones that are recorded in front of the fan, although slightly attenuated in their intensity. However, such a reduced intensity of the pressure variations does not impair the correct utilization of the tube 9 and the probe 11 , which is inserted in such a tube, of the thermostat means 12. It is in fact sufficient to increase, even to a slight extent, the flow section of said tube in order to ensure an otpimum air or steam passage inside it even with minimum pressure differences across the tube, ie. existing at both ends of the tube.

This particular behaviour has been explained with the fact that the steam pressure existing inside the cavity after the cooking process is concluded is sufficiently high as to be able to overcome the slight negative pressure caused by the rotation of the fan wheel and permeate through the interstice 13 formed between the rear wall 6 and the rear portion of the fan in the back-chamber 5.

In this way, said tube can therefore be arranged in a very economical and realiable manner, is not exposed to any risk of its arrangement being altered for any reason, does not require being disassembled or removed even when the oven must be thoroughly and completely cleaned, and has a simplified and economical construction.

A further improvement in the embodiment of the present invention is reached by letting the inside of the cooking chamber communicate more effectively with the space behind the fan where the nozzle 10 is situated. Such a more effective communication is reached by providing a plurality of openings 14 in the disk 15 which is shrink-fitted onto the shaft 16 of the motor 17 trasmitting the motion from said motor to the blades 18 of the fan wheel.

Said openings, by actually letting said interstice 13 communicate directly with the cooking cavity 2, are instrumental in promoting the direct passage of steam into the tube 9 and, as a consequence, in improving the rapidity of the response of the thermostat means to variations in the conditions prevailing in the cooking cavity.

The oven is of course provided with a number of further devices and component parts, which however are substantially irrelevant as far as the actual purpose of this invention is concerned and shall therefore not be dealt with here any further.

Although the invention has been described on the basis of the example represented by some preferred embodiments thereof, and using a generally known terminology, it cannot be considered as been limited by these, since anyone skilled in the art will appreciate that a number of variations and modifications can be further made involving both construction and shape.

## Claims

1. Steam-operated food cooking oven, comprising an access door (1), a cooking cavity (2), a motor-driven fan (3) located on the rear side of said cooking cavity and provided with an internal disk (15), a partition wall (4) to distribute the flow of air generated by said fan, a back-chamber (5) accomodating said fan and delimited by said partition wall (4) on its front side and by the rear wall (6) of the oven on its rear side, a conduit (7) adapted to transfer steam from an external boiler (8) into said cooking cavity, and a tube (9) inserted between the outer and the inner side of said cooking cavity (2), where the same tube terminates with a nozzle (10), an appropriate temperature sensing means (11) connected with a thermostat means (12) being inserted in said tube (9), **characterized in that** said tube (9) enters said back-chamber (5) from the outside by passing through said rear wall (6), whereas its nozzle (10) is accomodated in the interstice (13) formed between the rear wall (6) and the rear portion of the fan (3).

2. Steam-operated food cooking oven according to claim 1, comprising also an internal disk (15) fitted onto the shaft (16) of the motor (17), **characterized in that** a plurality of openings (14) passing through said disk are provided in said internal disk (15).

## Patentansprüche

1. Dampfbetriebener Kochherd für Nahrungsmittel, umfassend eine Zugangstür (1), einen Kochraum (2), einen motorbetriebenen Lüfter (3), der auf der Rückseite des Kochraumes angeordnet und mit einer inneren Scheibe (15) versehen ist, eine Trennwand (4), um den vom Lüfter erzeugten Luftstrom zu verteilen, eine hintere Kammer (5), die den Lüfter aufnimmt und durch die Trennwand (4) an ihrer Vorderseite und durch die Rückwand (6) des Herdes an ihrer Rückseite abgegrenzt ist, einen Kanal (7), der zur Übertragung von Dampf von einem außerhalb angeordneten Boiler (8) in den Kochraum vorgesehen ist, und ein Rohr (9), welches zwischen der Außenseite und der Innenseite des Kochraumes (2), wo das Rohr in einer Düse (10) endet, angeordnet ist, und eine geeignete temperaturerfassende Einrichtung (11), welche mit einer Thermostat-Einrichtung (12), die in das Rohr (9) eingefügt ist, verbunden ist, **dadurch gekennzeichnet, daß** das Rohr (9) von der Außenseite in die hintere Kammer (5) eintritt, indem sie durch die Rückwand (6) hindurchgeht, während die Düse (10) in dem Zwischenraum (13), der zwischen der Rückwand (6) und dem hinteren Teil des Lüfters (3) besteht, angeordnet ist.

2. Dampfbetriebener Kochherd für Nahrungsmittel nach Anspruch 1, der zusätzlich eine innere Scheibe (15) aufweist, welche an der Welle (16) des Motors (17) befestigt ist, **dadurch gekennzeichnet, daß** eine Anzahl von Öffnungen (14), die durch die Scheibe hindurchgehen, in der inneren Scheibe (15) vorgesehen sind

## Revendications

1. Four de cuisson de nourriture fonctionnant à la vapeur, comprenant une porte d'accès (1), une cavité de cuisson (2), un ventilateur (3) entraîné par moteur situé sur le côté arrière de ladite cavité de cuisson et muni d'un disque interne (15), une paroi de séparation (4) pour distribuer l'écoulement d'air produit par ledit ventilateur, une arrière-chambre (5) logeant ledit ventilateur et délimitée par ladite paroi de séparation (4) sur son côté avant et par la paroi arrière (6) du four sur son côté arrière, un conduit (7) apte à transférer la vapeur d'un bouilleur extérieur (8) dans ladite cavité de cuisson, et un tube (9) inséré entre le côté extérieur et le côté intérieur de ladite cavité de cuisson (2), où le même tube se termine avec un bec (10), un moyen de détection de température approprié (11) relié à un moyen formant thermostat (12) étant inséré dans ledit tube (9), caractérisé en ce que ledit tube (9) pénètre dans ladite arrière-chambre (5) depuis l'extérieur en traversant ladite paroi arrière (6), tandis que son bec (10) est logé dans l'interstice (13) formé entre la paroi arrière (6) et la partie arrière du ventilateur (3).

2. Four de cuisson de nourriture fonctionnant à la vapeur selon la revendication 1, comprenant également un disque interne (15) ajusté sur l'arbre (16) du moteur (17), caractérisé en ce qu'une pluralité d'ouvertures (14) traversant ledit disque sont prévues dans ledit disque interne (15).
